# EUROPÄISCHE PATENTSCHRIFT

(11) **EP 1 095 723 B1**
(45) Veröffentlichungstag und Bekanntmachung des Hinweises auf die Patenterteilung: **05.12.2012**
(21) Anmeldenummer: 00710040.7
(22) Anmeldetag: 30.04.1996
(51) Int. Cl.: B23D 31/00, C21D 1/09

(54) **Vorrichtung zur gleichzeitigen Bearbeitung eines Bauteiles an mehreren Stellen mittels eines Lasers**
Machine for working with laser on more spots at the same time
Dispositif pour travailler au laser à plusieures places en même temps

(30) Priorität: 19.12.1995 DE 19547389
(43) Veröffentlichungstag der Anmeldung: 02.05.2001
(62) Teilanmeldung aus: 96914154.8
(73) Patentinhaber: Bayerische Motoren Werke Aktiengesellschaft, 80809 München (DE); LASAG AG, 3602 Thun (CH)
(72) Erfinder: Luchner, Clemens, 85598 Baldham (DE); Pöllath, Helmut, 82223 Eichenau (DE); Hochsteiner, Helmut, 4431 Haidershofen 257 (AT)
(74) Vertreter: Sparing Röhl Henseler

(56) Entgegenhaltungen:
- US-A- 5 223 693

## Beschreibung

Die Erfindung bezieht sich nach den Oberbegriffen der Patentansprüche 1 und 9 auf eine Vorrichtung bzw. ein Verfahren zur gleichzeitigen Bearbeitung eines Bauteiles an mehreren Stellen mittels eines Lasers, wobei mittels kreuzender Laserstrahlen wenigstens einer Lasereinrichtung entsprechend einer Impulsfrequenz und einer hierzu relativ angepassten Bewegungsgeschwindigkeit des Bauteiles gleichzeitig lochartige Materialabtragungen entlang einander gegenüberliegender Linien erzielt sind

Eine Vorrichtung und ein Verfahren nach dem Oberbegriff des Patentanspruchs 1 bzw. 9, sind aus der DE 43 28 894 C2 bekannt, bei der ein Laserstrahl aus einer einzigen Laserquelle durch eine Strahlteilereinrichtung in mindestens zwei Teilstrahlen aufgeteilt ist und jeder der Teilstrahlen mittels einer Fokussiereinrichtung in sich kreuzende Laserstrahlen aufgeteilt ist derart, dass die kreuzenden Laserstrahlen in diametral beabstandeten Punkten auf der Oberfläche eines translatorisch bewegten Werkstückes punktförmig fokussiert sind zur Ausbildung von Löcherketten bzw. eng benachbarten Perforationen.

Weitere derartige Vorrichtungen sind aus den deutschen Patenten DE 29 22 976 C2 und DE 29 37 914 C2 bekannt, wobei bei der jeweiligen Strahlteilereinrichtung eine der Anzahl der lichtdurchlässigen Reflektoren entsprechende Anzahl an Teilstrahlen abgelenkt ist auf Fokussiereinrichtungen zur Ausbildung symmetrisch sich kreuzender Laserstrahlen einerseits und unter Verwendung weiterer optischer Mittel zur Ausbildung asymmetrisch sich kreuzender Laserstrahlen andererseits, wobei in jedem Fall die kreuzenden Laserstrahlen in der Oberfläche eines translatorisch bewegten Bandmaterials fokussiert sind zur Ausbildung lasergebohrter Löcher in einer Reihenanordnung bzw. in Löcherketten.

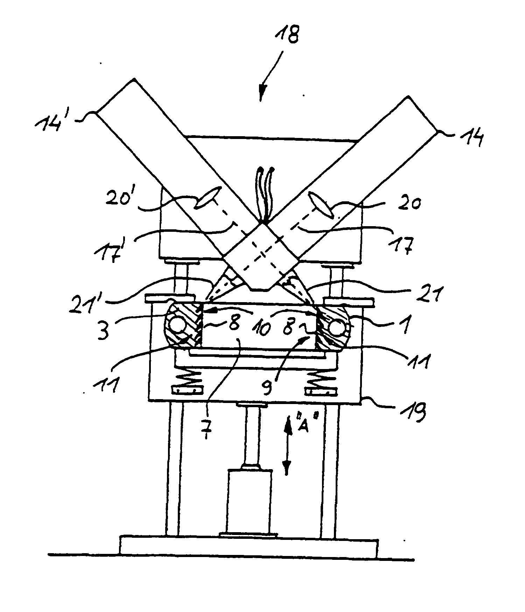

Derartige Löcherketten bzw. Perforationen werden insbesondere in der Ausgestaltung als lasergebohrte Sacklöcher gemäß der DE 27 19 275 C2 im Stand der Technik als Schwächungslinien entlang von Bruchtrennebenen eines durch Bruchtrennen zu teilenden Bauteiles vorgesehen. Als ein derartiger Stand der Technik ist beispielsweise die US 4,549,063 zu nennen, die ein Verfahren beschreibt zur Ausbildung von Schwächungslinien in einer festen Auflage eines bandartigen, translatorisch bewegten Laminates. Hierbei werden mittels eines Lasers, wie aus Figur 4 ersichtlich, langlochartig muldenförmige Sachlöcher ausgebildet, die durch Stege vorbestimmter Breite voneinander getrennt sind. Bei einer Bruchbeanspruchung ist die Bruchbelastung in diesen Stegen konzentriert, wodurch aufgrund dieser Schwächungslinie bzw. der Perforation infolge verringerten Querschnittes der festen Auflage diese entlang dieser Schwächungslinie bricht.

Die vorbeschriebene Bruchmechanik kommt ferner bei dem aus der EP 0 613 765 A1 bekannten Verfahren zur Herstellung von Plättchen aus einer großen Platte zur Anwendung, wobei mittels eines Lasers Schwächungslinien mit trichterförmigen Sachlöchem in einer Platte aus Metall, Kunststoff, Keramik oder einem Verbundwerkstoff ausgebildet sind.

Schließlich ist aus dem deutschen Gebrauchsmuster DE-U 295 19 126 eine aus lasergebohrten, zylindrischen Sacklöchern gebildete Perforation als Schwächungslinie bzw. Anrissstelle zum Bruchtrennen einer Lageranordnung in einem Bauteil, vorzugsweise in einem Pleuel, bekannt. Die hierfür vorgeschlagene Vorrichtung zur Anordnung voneinander gegenüberliegenden Anrissstellen in einer großen Lagerbohrung eines Pleuels sieht vor, dass mittels einer Lasereinrichtung mit gesonderten Fokussiereinrichtungen in zwei benachbart angeordneten Pleueln in einem ersten Arbeitsgang gleichzeitig jeweils eine Anrissstelle in jedem Pleuel ausgebildet ist. Zur Ausbildung der anderen, gegenüberliegenden Anrissstelle in jedem Pleuel werden in einem Fall die beiden gesonderten Fokussiereinrichtungen geschwenkt zur Durchführung des zweiten Arbeitsganges und im zweiten Fall bei starr angeordneten Fokussiereinrichtungen werden die Pleuel umgeschichtet zur Durchführung des zweiten Arbeitsganges.

Diese bekannte Ausbildung von Schwächungslinien bzw. Anrissstellen zum Bruchtrennen eines Bauteiles in einer Lageranordnung ist geräte- und arbeitsaufwendig, wobei jede der Vorrichtungen durch Mehrfachnutzung zur Erstellung gegenüberliegender Anrissstellen bzw. Perforationen in einer einzigen Lageranordnung erheblich belastet ist.

Der Erfindung liegt die Aufgabe zugrunde, die gattungsgemäße Vorrichtung und Verfahren derart weiterzubilden, dass bei einfachem Aufbau die Anrissstellen mit geringerem Aufwand erzeugt sind.

Diese Aufgabe wird durch die Merkmalskombination der Ansprüche 1 und 9 gelöst.

Mit der Erfindung ist in vorteilhafter Weise eine Vorrichtung von einfachem Aufbau zur gleichzeitigen Ausbildung von diametral in ein und derselben Ausnehmung eines Bauteiles vorgesehenen Anrissstellen erzielt. Weiter vorteilhaft ist eine wesentlich höhere Fertigungsgeschwindigkeit für die Anrissstellen mit besonders genauer Lage der Anrissstellen. Als weiterer Vorteil gilt, dass zur Schonung der Laseroptik das in einer Aufnahme positionierte Bauteil relativ zu den Lasereinrichtungen die Vorschubbewegung zur Ausbildung der hintereinander beabstandet angeordneten Vertiefungen ausführt.

Eine vorteilhafte Ausgestaltung der Vorrichtung ist weiter dadurch erreicht, dass zwei gesonderte Optiken für zwei optische Wege für zwei wenigstens mittels einer Lasereinrichtung gelieferte Laserstrahlen vorgesehen sind, wobei sich die optischen Wege strahlabwärts der gesonderten Optiken kreuzen und auf die Bauteiloberfläche der Ausnehmung des Bauteiles gerichtet bzw. fokussiert sind.

Weiter werden gemäß einer vorteilhaften Ausführungsform die beiden gesonderten Optiken in zwei Einheiten angeordnet, die starr mit einem unteren Teil verbunden sind, in dem sich der Kreuzungsbereich der beiden optischen Wege befindet.

Gemäß einer vorteilhaften Variante umfasst die Vorrichtung zwei Düsen, die am unteren Teil befestigt sind und jeweils in der Verlängerung der beiden optischen Wege angeordnet sind, so dass die beiden Laserstrahlen durch Mündungen der beiden Düsen austreten, die der Zufuhr von Luft oder Sauerstoff zum Ausblasen des erschmolzenen Werkstoffes aus der jeweiligen Vertiefung jeder Anrissstelle dienen.

Gemäß einer ersten Ausgestaltung wird weiter vorgeschlagen, dass zwei gesonderte Lasereinrichtungen mit kreuzenden Laserstrahlen vorgesehen sind, wobei die Laserstrahlen durch Mündungen von Düsen austreten, die der Zufuhr von Luft oder Sauerstoff zum Ausblasen des erschmolzenen Werkstoffes aus der jeweiligen Vertiefung jeder Anrissstelle dienen.

Gemäß einer zweiten Ausgestaltung wird eine einzige Lasereinrichtung in Kombination mit einem Strahlteiler zur Erzeugung sich kreuzender Laserstrahlen verwendet.

In weiterer Ausgestaltung findet die erfindungsgemäße Vorrichtung bevorzugt Verwendung zur Ausbildung von Bruchtrenn-Anrissstellen in einem Brennkraftmaschinen-Pleuel.

Die Erfindung ist anhand eines in der Zeichnung dargestellten Ausführungsbeispiels einer Bearbeitungsvorrichtung für ein Pleuel mit fest angeordneten Lasereinrichtungen beschrieben.

Die einzige Figur zeigt eine unmaßstäblich dargestellte Vorrichtung 18, bei der zwei sich kreuzende, gepulste Laserstrahlen 17 und 17' strahlabwärts des Strahlen-Kreuzungsbereiches in einem diametralen Abstand auf die Bauteiloberfläche 9 der Lagerbohrung 7 auftreffen und wobei eine Relativbewegung zwischen Laserstrahlen 17 und 17' und Bauteil 1 vorgesehen ist. Die Laserstrahlen 17 und 17' sind durch die zwei entsprechenden optischen Wege definiert und dargestellt.

Die Vorrichtung 18 umfasst zwei Lasereinrichtungen 14, 14' mit sich kreuzenden, vorzugsweise durchdringend kreuzenden Laserstrahlen 17 und 17', die zur gleichzeitigen Fertigung beider Anrissstellen 8 in einem Lagerauge 3 eines als Pleuel gestalteten Bauteiles 1 dienen. Weiter ist die Vorrichtung 18 mit einer Aufnahme 19 zur Positionierung des Pleuels 1 ausgerüstet. Zur Schonung der empfindlichen Laseroptiken 20, 20' sind die Lasereinrichtungen 14, 14' in der Vorrichtung 18 fest angeordnet und die Aufnahme 19 relativ zu den Laservorrichtungen 14, 14' zur Erzielung einer vorbestimmten Vorschubbewegung gemäß Pfeil "A" motorisch verstellbar ausgebildet. Die Vorschubbewegung bemisst sich entsprechend den voneinander getrennten Vertiefungen 11 jeder Anrissstelle 8.

Die einzige Figur zeigt, dass die Laserstrahlen 17 und 17' durch Mündungen von Düsen 21, 21' austreten, die der Zufuhr von Luft oder Sauerstoff zum Ausblasen des erschmolzenen Werkstoffes aus der jeweiligen Vertiefung 11 dienen.

Anstelle zweier Lasereinrichtungen 14, 14' kann auch eine einzige Lasereinrichtung mit einem Strahlteiler vorgesehen sein. Weiter können die Vertiefungen 11 von beliebigem Querschnitt sein, wofür Laserstrahlen mit entsprechendem Strahlquerschnitt (z.B. Rechteckquerschnitt) zum Einsatz kommen.

Als weitere Vorteile ergeben sich eine höhere Fertigungsgeschwindigkeit bei noch genauerer Lage der Anrissstellen 8 sowie eine vereinfachte Aufnahme 19 durch den Fortfall eines Werkstückumschlages. Auch ein Laserschwenken erübrigt sich mit der vorgeschlagenen Vorrichtung 18. Wie Versuche zudem zeigten, ergeben in den diametralen Anrissstellen 8 zueinander V-förmig angeordnete Vertiefungen 11 in überraschender Weise eine weitere Reduzierung der Bruchtrennkraft und damit eine geringere Bauteilverformung.

## Patentansprüche

1. Vorrichtung zur gleichzeitigen Bearbeitung eines Bauteiles (1) an mehreren Stellen mittels eines Lasers,
- wobei mittels kreuzender Laserstrahlen (17, 17') wenigstens einer Lasereinrichtung (14, 14') entsprechend einer Impulsfrequenz und einer hierzu relativ angepassten Bewegungsgeschwindigkeit des Bauteiles (1) gleichzeitig lochartige Materialabtragungen entlang einander gegenüberliegender Linien erzielbar sind,
**dadurch gekennzeichnet,**
- **dass** eine Aufnahme (19) zur Positionierung des Bauteiles (1) vorgesehen ist, die motorisch entlang einer Linie (A) derart verstellbar ausgebildet ist, dass der Abstand zwischen der Aufnahme (19) und dem Strahlenkreuzungsbereich der kreuzenden Laserstrahlen (17, 17') veränderbar ist zur Erzielung einer vorbestimmten Vorschubbewegung.

2. Vorrichtung nach Anspruch 1, **dadurch gekennzeichnet,**
- **dass** zwei gesonderte Optiken (20, 20') für zwei optische Wege (17, 17') für zwei wenigstens mittels einer Lasereinrichtung (14, 14') gelieferte Laserstrahlen (17, 17') vorgesehen sind, wobei
- sich die optischen Wege (17, 17') strahlabwärts der gesonderten Optiken (20, 20') kreuzen und auf die Bauteiloberfläche (9) der Ausnehmung (7) des Bauteiles (1) gerichtet bzw. fokussiert sind.

3. Vorrichtung nach Anspruch 2, **dadurch gekennzeichnet, dass** die beiden gesonderten Optiken (20, 20') jeweils in zwei Einheiten angeordnet sind, die starr mit einem unteren Teil verbunden sind (Figur), in dem sich der Kreuzungsbereich der beiden optischen Wege befindet, entlang welchen sich jeweils die beiden Laserstrahlen (17, 17') ausbreiten.

4. Vorrichtung nach Anspruch 3, **dadurch gekennzeichnet, dass** sie zwei Düsen (21, 21') umfasst, die am unteren Teil befestigt sind (Figur) und jeweils in der Verlängerung der beiden optischen Wege angeordnet sind, so dass die beiden Laserstrahlen durch Mündungen der beiden Düsen (21, 21') austreten, die der Zufuhr von Luft oder Sauerstoff zum Ausblasen des erschmolzenen Werkstoffes aus der jeweiligen Vertiefung (11) jeder Anrissstelle (8) dienen.

5. Vorrichtung nach irgendeinem der vorangehenden Ansprüche, **dadurch gekennzeichnet, dass** die beiden Laserstrahlen (17, 17') von zwei verschiedenen Laservorrichtungen (14, 14') geliefert werden.

6. Vorrichtung nach irgendeinem der Ansprüche 1 bis 4, **dadurch gekennzeichnet, dass** die beiden Laserstrahlen durch eine einzige Lasereinrichtung geliefert werden, der ein Strahlteiler zugeordnet ist.

7. Vorrichtung nach irgendeinem der vorangehenden Ansprüche, **dadurch gekennzeichnet, dass** die wenigstens eine Lasereinrichtung fest in dieser Vorrichtung (18) angeordnet ist, wobei die Mittel zur Ausführung einer Relativbewegung einer Aufnahme (19) für wenigstens ein Bauteil (1) zugeordnet sind.

8. Vorrichtung nach irgendeinem der vorangehenden Ansprüche, **gekennzeichnet durch** die Verwendung zur Ausbildung von Bruchtrenn-Anrissstellen (8) in einer Lagerbohrung (7) eines Brennkraftmaschinen-Pleuels (1).

9. Verfahren zum gleichzeitigen Bearbeiten eines Bauteiles (1) an mehreren Stellen mittels eines Lasers,
- wobei lochartige Materialabtragungen mittels kreuzender Laserstrahlen (17, 17') wenigstens einer Lasereinrichtung (14, 14') entsprechend einer Impulsfrequenz und einer hierzu relativ angepassten Bewegungsgeschwindigkeit des Bauteiles (1) gleichzeitig entlang einander gegenüberliegender Linien erzielt werden,
**dadurch gekennzeichnet,**
- **dass** eine Aufnahme (19) zur Positionierung des Bauteiles (1) verwendet wird, die motorisch entlang einer Linie (A) derart verstellbar ausgebildet ist, dass der Abstand zwischen der Aufnahme (19) und dem Strahlenkreuzungsbereich der kreuzenden Laserstrahlen (17, 17') veränderbar ist zur Erzielung einer vorbestimmten Vorschubbewegung.

## Claims

1. Device for simultaneously machining a component (1) at a plurality of points by means of a laser,
- wherein hole-like material ablations can be obtained simultaneously along mutually opposing lines by means of crossing laser beams (17, 17') from at least one laser apparatus (14, 14'), said ablations being obtained in accordance with a pulse frequency and a movement speed of the component (1) adapted relative thereto,
**characterized**
- **in that** provision is made for a receptacle (19) for positioning the component (1), which receptacle is designed to be able to be displaced along a line (A) in a motor-driven fashion such that the distance between the receptacle (19) and the beam-crossing region of the crossing laser beams (17, 17') can be modified in order to obtain a predetermined advance movement.

2. Device according to Claim 1, **characterized**
- **in that** provision is made for two separate optical units (20, 20') for two optical paths (17, 17') for two laser beams (17, 17') at least supplied by means of a laser apparatus (14, 14'), with
- the optical paths (17, 17') crossing downstream of the separate optical units (20, 20') and being directed or focussed at the component surface (9) of the recess (7) in the component (1).

3. Device according to Claim 2, **characterized in that** the two separate optical units (20, 20') are each arranged in two units which are rigidly connected to a lower part (figure) in which the crossing region of the two optical paths along which the two laser beams propagate (17, 17') is located.

4. Device according to Claim 3, **characterized in that** it comprises two nozzles (21, 21') which are attached to the lower part (figure) and are each arranged in the continuation of the two optical paths such that the two laser beams emerge through openings of the two nozzles (21, 21') which serve to supply air or oxygen for blowing out the molten substance out of the respective depression (11) of each incipient fracture point (8).

5. Device according to any one of the preceding claims, **characterized in that** the two laser beams (17, 17') are supplied by two different laser devices (14, 14').

6. Device according to any one of Claims 1 to 4, **characterized in that** the two laser beams are supplied by a single laser apparatus, which has a beamsplitter assigned thereto.

7. Device according to any one of the preceding claims, **characterized in that** the at least one laser apparatus is fixedly arranged in this device (18), with the means for carrying out a relative movement of a receptacle (19) for at least one component (1) being assigned.

8. Device according to any one of the preceding claims, **characterized by** the use for forming fracture-separation incipient fracture points (8) in a bearing bore (7) of an internal combustion engine connecting rod (1).

9. Method for simultaneously machining a component (1) at a plurality of points by means of a laser,
- wherein hole-like material ablations are simultaneously obtained along mutually opposing lines by means of crossing laser beams (17, 17') from at least one laser apparatus (14, 14'), said ablations being obtained in accordance with a pulse frequency and a movement speed of the component (1) adapted relative thereto,
**characterized**
- **in that** use is made of a receptacle (19) for positioning the component (1), which receptacle is designed to be able to be displaced along a line (A) in a motor-driven fashion such that the distance between the receptacle (19) and the beam-crossing region of the crossing laser beams (17, 17') can be modified in order to obtain a predetermined advance movement.

## Revendications

1. Dispositif pour l'usinage simultané d'une pièce (1) en plusieurs endroits au moyen d'un laser,
- dans lequel des enlèvements de matière en forme de trous peuvent être effectués simultanément le long de lignes opposées l'une à l'autre au moyen de faisceaux laser qui se croisent (17, 17') d'au moins un dispositif de laser (14, 14') selon une fréquence d'impulsion et une vitesse de déplacement de la pièce (1) adaptée par rapport à celle-ci,
**caractérisé en ce que**
- il est prévu un logement (19) destiné au positionnement de la pièce (1), qui est réalisé de façon déplaçable par un moteur le long d'une ligne (A), de telle manière que la distance entre le logement (19) et la zone de croisement de faisceaux des faisceaux laser qui se croisent (17, 17') puisse être modifiée pour produire un mouvement d'avance prédéterminé.

2. Dispositif selon la revendication 1, **caractérisé en ce que**
- il est prévu deux optiques séparées (20, 20') pour deux chemins optiques (17, 17') pour deux faisceaux laser (17, 17') produits au moins au moyen d'un dispositif de laser (14, 14'), dans lequel
- les chemins optiques (17, 17') se croisent en aval des optiques séparées (20, 20') et sont dirigés ou focalisés sur la surface de pièce (9) de l'évidement (7) de la pièce (1).

3. Dispositif selon la revendication 2, **caractérisé en ce que** les deux optiques séparées (20, 20') sont disposées respectivement dans deux unités, qui sont assemblées de façon rigide à une partie inférieure (Figure), dans laquelle se trouve la zone de croisement des deux chemins optiques, le long desquels les deux faisceaux laser (17, 17') se propagent respectivement.

4. Dispositif selon la revendication 3, **caractérisé en ce qu'**il comprend deux buses (21, 21'), qui sont fixées à la partie inférieure (Figure) et qui sont disposées respectivement dans le prolongement des deux chemins optiques, de telle manière que les deux faisceaux laser sortent par des embouchures des deux buses (21, 21'), qui servent pour l'apport d'air ou d'oxygène destiné à l'expulsion du matériau fondu hors du creux respectif (11) de chaque zone de Traçage (8).

5. Dispositif selon l'une quelconque des revendications précédentes, **caractérisé en ce que** les deux faisceaux laser (17, 17') sont produits par deux dispositifs de laser différents (14, 14').

6. Dispositif selon l'une quelconque des revendications 1 à 4, **caractérisé en ce que** les deux faisceaux laser sont produits par un seul dispositif de laser, auquel est associé un diviseur de faisceau.

7. Dispositif selon l'une quelconque des revendications précédentes, **caractérisé en ce que** ledit au moins un dispositif de laser est disposé de façon fixe dans ce dispositif (18), dans lequel les moyens destinés à l'exécution d'un mouvement relatif sont associés à un logement (19) pour au moins une pièce (1).

8. Dispositif selon l'une quelconque des revendications précédentes, **caractérisé par** l'utilisation en vue de réaliser des zones de traçage (8) de séparation par rupture dans un alésage de palier (7) d'une bielle (1) de moteur à combustion interne.

9. Procédé pour l'usinage simultané d'une pièce (1) en plusieurs endroits au moyen d'un laser,
- dans lequel on effectue des enlèvements de matière en forme de trous simultanément le long de lignes opposées l'une à l'autre au moyen de faisceaux laser qui se croisent (17, 17') d'au moins un dispositif de laser (14, 14') selon une fréquence d'impulsion et une vitesse de déplacement de la pièce (1) adaptée par rapport à celle-ci,
**caractérisé en ce que**
- on utilise un logement (19) destiné au positionnement de la pièce (1), qui est réalisé de façon déplaçable par un moteur le long d'une ligne (A), de telle manière que la distance entre le logement (19) et la zone de croisement de faisceaux des faisceaux laser qui se croisent (17, 17') puisse être modifiée pour produire un mouvement d'avance prédéterminé.
